Europäisches Patentamt

European Patent Office

Office européen des brevets

(11) Veröffentlichungsnummer: **0 499 772 A1**

## EUROPÄISCHE PATENTANMELDUNG

(21) Anmeldenummer: **92100174.9**

(51) Int. Cl.5: **A01F 25/20**

(22) Anmeldetag: **08.01.92**

(30) Priorität: **01.02.91 DE 4103042**
**28.06.91 DE 4121328**

(43) Veröffentlichungstag der Anmeldung:
**26.08.92 Patentblatt 92/35**

(84) Benannte Vertragsstaaten:
**AT BE CH DE DK ES FR GB IT LI NL SE**

(71) Anmelder: **von der Heide, Hans**
**Ibbenbürener Strasse 17**
**W-4530 Ibbenbüren 2- Laggenbeck(DE)**

(72) Erfinder: **von der Heide, Hans**
**Ibbenbürener Strasse 17**
**W-4530 Ibbenbüren 2- Laggenbeck(DE)**

(74) Vertreter: **Schulze Horn, Stefan, Dipl.-Ing.**
**M.Sc.**
**Goldstrasse 36**
**W-4400 Münster(DE)**

(54) **Transport- und Austragevorrichtung für einen Futtermittelblock.**

(57) Die Erfindung betrifft eine Transport- und Austragvorrichtung für einen Futtermittelblock, wobei die Vorrichtung (1) einen Behälterteil (2) zur Aufnahme des Futtermittelblocks und eine mit dem Behälterteil (2) verbundene Zerkleinerungs- und Austrageinrichtung (3) umfaßt.

Die neue Vorrichtung ist dadurch gekennzeichnet,
- daß in einer dem Transport des Futtermittelblocks dienenden Grundstellung der Vorrichtung (1) der Behälterteil (2) mit einer offenen Seite (21) nach oben weisend und die Zerkleinerungs- und Austrageinrichtung (3) oberhalb dieser offenen Seite (21) des Behälterteils (2) angeordnet ist und
- daß der Behälterteil (2) zusammen mit der Zerkleinerungs- und Austrageinrichtung (3) um eine im wesentlichen horizontale Schwenkachse (40) um etwa 180° verschwenkbar ist in eine Austragstellung, in welcher die offene Seite (21) des Behälterteils (2) nach unten weist, in welcher die Zerkleinerungs- und Austrageinrichtung (3) unterhalb dieser offenen Seite (21) liegt und in welcher der im Behälterteil (2) befindliche Futtermittelblock durch Schwerkraftwirkung der Zerkleinerungs- und Austrageinrichtung (3) von oben her zugeführt wird.

Fig. 7

Die Erfindung betrifft eine Transport- und Austragvorrichtung für einen Futtermittelblock, gemäß dem Oberbegriff des Patentanspruchs 1.

Eine Vorrichtung der genannten Art ist aus der EP 0 318 723 A2 bekannt. Diese Vorrichtung besteht aus einem Behälter mit einer verschwenkbaren Ladeplattform zum Einladen eines Futtermittelblocks. Der Behälterboden ist als Kratzboden ausgeführt und seitlich am Behälter ist eine schräg nach oben und außen verlaufende Fräskettenanordnung zum Zerkleinern und Ausbringen des Futtermittels angeordnet. Als nachteilig wird bei dieser Vorrichtung angesehen, daß der Behälterboden wegen seiner Ausführung als Kratzboden relativ hoch liegt und daß die Baubreite der Vorrichtung wegen der seitlichen Fräskettenanordnung relativ groß ist. Außerdem liegt ein Nachteil der Vorrichtung in dem hohen technischen Aufwand für einen zweiseitigen Austrag des Futtermittels, da hierfür zwei gesonderte Fräskettenanordnungen erforderlich sind.

Eine weitere Vorrichtung der eingangs genannten Art ist aus der EP 0 026 143 A1 bekannt. Auch diese Vorrichtung besteht aus einem Behälter mit einer verschwenkbaren Ladeplattform und mit einem Kratzboden. Am Austragende des Kratzbodens ist zusätzlich eine Lockerungs- und Zerkleinerungseinrichtung, bestehend aus einer mit Flügeln versehenen Welle, angeordnet. Weiterhin besitzt diese Vorrichtung eine Schneideinrichtung, die aus einer U-förmig vor dem Behälter über der Ladeplattform verlaufenden Führungsschiene und einem daran verfahrbaren, vertikal oszillierenden Schneidmesser besteht. Diese Schneideinrichtung ist, unabhängig von der Ladeplattform, ebenfalls verschwenkbar. Nachteilig ist bei dieser Vorrichtung die große Baulänge, die durch die weit über den Behälter vorragende Schneideinrichtung verursacht wird. Außerdem liegt auch hier der Boden des Behälters infolge seiner Ausführung als Kratzboden relativ hoch.

Schließlich ist noch aus der GB 2 191 992 A eine Vorrichtung für das Auschneiden und Transportieren eines Futtermittelblocks bekannt. Diese Vorrichtung umfaßt ebenfalls einen Behälter, wobei dessen Vorderwand und Seitenwände eine verschwenkbare Einheit bilden und an ihren Unterkanten mit Schneiden ausgebildet sind. Der Behälterboden ist hier ein Zinkenrost, der in einen Futtermittelvorrat einstechbar ist, wonach dann durch Abwärtsschwenken der verschwenkbaren Einheit ein Futtermittelblock ausschneidbar ist. Diese Vorrichtung ist zwar insgesamt sehr kompakt und besitzt einen tiefliegenden Boden; jedoch ist ein gezielten Zerkleinern und dosiertes Austragen des Futtermittels nicht möglich, weil entsprechende Einrichtungen gänzlich fehlen. Es kann lediglich der ausgeschnittene Block abgeworfen werden, was aber nur eine undefinierte Lockerung des Futtermittels ergibt.

Es stellt sich daher die Aufgabe, eine Vorrichtung der eingangs genannten Art zu schaffen, die bei einer sehr kompakten Bauform ein einfaches Aufnehmen und Transportieren eines Futtermittelblocks ermöglicht und die ein gezieltes Zerkleinern und Auflockern sowie dosiertes Austragen des Futtermittels gewährleistet.

Die Lösung dieser Aufgabe gelingt erfindungsgemäß durch eine Transport- und Austragvorrichtung der eingangs genannten Art mit den kennzeichnenden Merkmalen des Patentanspruchs 1.

Durch die erfindungsgemäß vorgesehene Verschwenkbarkeit um eine horizontale Achse wird erreicht, daß die Zerkleinerungs- und Austrageinrichtung in der Grundstellung der Vorrichtung in deren oberem Teil liegt, d. h. an einer Stelle, wo sie das Aufnehmen des Futtermittelblocks nicht stört oder behindert. Der Boden des Behälters kann sehr flach sein, weil keine Teile der Zerkleinerungs- und Austrageinrichtung an ihm angeordnet sind, und es wird ein Absenken des Behälterbodens bis auf das Niveau des Untergrundes erlaubt. Das Aufnehmen eines Futtermittelblocks wird aufgrund des flachen Bodens und dessen weiter Absenkbarkeit sehr vereinfacht, wobei verschiedene Arten der Aufnahme, wie sie für sich aus dem Stand der Technik bekannt sind, möglich sind. Erst nach der 180°-Verschwenkung des Behälters zusammen mit der Zerkleinerungs- und Austrageinrichtung gelangt letztere in eine Position unterhalb der offenen Behälterseite und kann dann das Zerkleinern und Austragen des Futtermittels bewirken. Durch die beschriebene Anordnung der Zerkleinerungs- und Austrageinrichtung wird eine kompakte Bauform der Vorrichtung ermöglicht, wobei insbesondere eine geringe Baubreite und Baulänge erreicht werden. Hierdurch wird ein Einsatz der Vorrichtung auch bei beengtem Platzverhältnissen, wie sie häufig in älteren Stallgebäuden anzutreffen sind, ermöglicht. Eine etwas größere Bauhöhe ist dabei nicht kritisch, weil im allgemeinen die Raumhöhen die für die Vorrichtung einschließlich Zerkleinerungs- und Austrageinrichtung benötigte Höhe deutlich übersteigen.

Eine wesentliche Weiterbildung der Erfindung sieht vor, daß der Behälterteil eine Schneideinrichtung für das Ausschneiden eines Futtermittelblocks aus einem Futtermittelvorrat aufweist. Hierdurch wird die Vorrichtung noch vielseitiger einsetzbar und macht das Vorhalten eines separaten Siloblockschneiders überflüssig. Die konstruktive Gestaltung der Schneideinrichtung ist praktisch beliebig und kann aus dem Stand der Technik auf dem Gebiet der Siloblockschneider entnommen werden.

Weitere Ausgestaltungen und Weiterbildungen der Vorrichtung gehen aus den Unteransprüchen 3 bis 10 hervor.

Hinsichtlich der Zerkleinerungs- und Austrageinrichtung kann die Vorrichtung unterschiedlich ausgestaltet sein. Eine erste Ausführung sieht hierzu vor, daß die Zerkleinerungs- und Austrageinrichtung aus einem im Abstand zur offenen Seite des Behälterteils in Querrichtung der Vorrichtung verlaufenden Förderband und aus wenigstens einem zwischen dem Förderband und dem Behälterteil angeordneten, in Drehung um eine im wesentlichen vertikale Achse versetzbaren Schneid- und Kratzteller besteht. In der Austragstellung der Vorrichtung liegt ein in dieser befindlicher Futtermittelblock auf dem Schneid- und Kratzteller auf, so daß durch dessen Drehung von dem Futtermittelblock nach und nach Futtermittel abgetragen und zu dem in der Austragstellung unter dem Schneid- und Kratzteller liegenden Förderband gebracht werden kann. Je nach Größe der Vorrichtung können auch mehrere Schneid- und Kratzteller nebeneinander in einer Ebene vorgesehen sein.

Der Schneid- und Kratzteller ist dabei bevorzugt als Taumelscheibe mit radial außenseitig und in Austragstellung der Vorrichtung oberseitig angeordneten Schneidmessern und/oder Kratzleisten ausgeführt. Hierdurch wird eine wirksame Lockerung und Zerkleinerung von Futtermittel gewährleistet.

Eine zweite Ausführung der Zerkleinerungs- und Austrageinrichtung ist dadurch gekennzeichnet, daß diese aus einem im Abstand zur offenen Seite des Behälterteils in Querrichtung der Vorrichtung verlaufenden Förderband und aus wenigstens einer zwischen dem Behälterteil und dem Förderband angeordneten, in Drehung um eine in der Austragstellung im wesentlichen horizontale Achse versetzbaren Kratzwelle besteht.

Die bei dieser Ausführung der Vorrichtung als Zerkleinerungseinrichtung vorgesehene Kratzwelle oder Anordnung mehrerer Kratzwellen bietet den Vorteil, daß der freie Fallquerschnitt für von dem Futtermittelblock gelöstes Futtermittel nach unten zum Förderband hin wesentlich größer wird und daß dadurch die Gefahr eines Stauens oder Verfangens von Futtermittel an der Zerkleinerungseinrichtung auch bei der Verarbeitung von langfaserigem Futtermittel, wie Grassilage, sehr gering bleibt.

Eine Ausgestaltung dieser Vorrichtung sieht vor, daß die Kratzwelle aus einem zylindrischen oder hohlzylindrischen Wellenkörper und aus mit diesem starr verbundenen, radial vorragenden Kratzzinken besteht. Diese Ausgestaltung ist einfach und robust und ergibt eine hohe Betriebssicherheit.

Für die Kratzzinken ist bevorzugt vorgesehen, daß die jeweils als flache, spitz-elliptische Blechstücke ausgebildet und in Ebenen senkrecht zur Kratzwellen-Drehachse symmetrisch zu dieser angeordnet sind. Derartige Kratzzinken sind zum einen einfach herstellbar und bieten zum anderen den Vorteil, daß sie für beide Drehrichtungen der Kratzwelle gleichermaßen wirksam sind. Durch ihre spezielle Form wird zudem sichergestellt, daß ein Mitnehmen von Futtermittelfasern praktisch nur soweit erfolgt, wie der Futtermittelblock an der Kratzwelle anliegt. Ein unerwünschtes weiteres Mitnehmen wird durch die spitzelliptische Form der Zinken verhindert, da diese Form keinen Halt für die Fasern bietet und die Fasern an den gekrümmten Kanten der Zinken abgleiten.

Ergänzend kann die Kratzwelle zumindest an ihrer dem Behälterteil zugewandten Seite eine Abdeckung mit einen Durchlauf der Kratzzinken erlaubenden Schlitzen aufweisen. Diese Abdeckung wirkt als Abstreifer für das von den Zinken vom aufliegenden Futtermittelblock gelöste Futtermittel, so daß das Futtermittel nicht mehr bis zu der die Zinken tragenden drehenden Welle selbst gelangen kann und Futtermittelfasern sich auch nicht mehr um diese Welle wickeln können.

Bezüglich der Abdeckung sieht die Erfindung weiter vor, daß die Abdeckung im Querschnitt U-förmig ist und daß die seitlichen U-Schenkel der Abdeckung in Richtung zum Förderband hin über die Kratzzinken vorragen. Die Abdeckung ist hier also nach unten hin offen, so daß eventuell doch durch die Schlitze gelangendes Futtermittel von der offenen Unterseite der Abdeckung zum Förderband fallen kann. Außerdem ist eine derartige Abdeckung einfach herstellbar und problemlos montierbar und demontierbar, so daß erforderlichenfalls Reparaturen schnell und einfach erfolgen können.

Um auch größere Futtermittelblöcke gründlich zerkleinern und lockern zu können, sieht eine weitere Ausgestaltung der Erfindung mehrere parallel zueinander und quer zur Förderbandlaufrichtung ausgerichtete Kratzwellen vor.

Schließlich ist für diese Vorrichtung noch vorgesehen, daß der Antrieb der Kratzwelle(n) mit dem Antrieb des Förderbandes gekoppelt ist. Diese Ausgestaltung vereinfacht die Antriebseinrichtungen der Vorrichtung und stellt zudem sicher, daß von der Kratzwelle oder den Kratzwellen zum Förderband gelangendes Futtermittel stetig ausgetragen wird. Zugleich wird ein unnötiger Betrieb des Förderbandes vermieden, wenn die Kratzwellen kein Futtermittel zum Förderband bringen.

Eine dritte Ausführung der Zerkleinerungs- und Austrageinrichtung ist dadurch gekennzeichnet, daß die Zerkleinerungs- und Austrageinrichtung aus einem im Abstand zur offenen Seite des Behälterteils in Querrichtung der Vorrichtung verlaufenden Förderband und aus wenigstens einem zwischen dem Behälterteil und dem Förderband angeordneten Doppelmesser mit zwei Schneiden besteht, wobei in Austragstellung die Schneiden in einer vertikalen Ebene liegend der Futtermittelblock-Unterseite zugewandt sind und wobei wenigstens eine der beiden Schneiden in horizontaler Richtung parallel zur Förderbandebene oszillierend bewegbar ist. Bei dieser Ausführung sorgen die Doppelmesser mit ihren Schneiden einerseits für eine mechanische Lockerung des Futtermittels an der Unterseite des aufliegenden Futtermittelblocks und zum anderen für eine wirksame Zerkleinerung des Futtermittels durch Zerschneiden der Futtermittelfasern mittels der Schneiden. Hiermit wird insbesondere langfaseriges Futtermittel intensiv zerkleinert und somit für die Fütterung in vorteilhafter Weise aufbereitet.

Um auch größere Futtermittelblöcke mit einer relativ großen Grundfläche intensiv lockern und zerkleinern zu können, sind in einer Weiterbildung der zweiten Vorrichtung gemäß der vorliegenden Erfindung mehrere parallel zueinander und quer zur Förderbandlaufrichtung ausgerichtete Doppelmesser vorgesehen. Der Abstand der Doppelmesser voneinander wird dabei zweckmäßig so gewählt, daß sichergestellt ist, daß zwischen zwei nebeneinanderliegenden Doppelmessern keine unzerkleinerten und ungelockerten Futtermittelblockteile zum Förderband gelangen können.

In einer ersten, einfacheren Ausführung der Doppelmesser können diese mit je einer feststehenden und einer oszillierend bewegbaren Schneide ausgebildet sein. Um eine besonders intensive Lockerung und Zerkleinerung des Futtermittelblocks zu erreichen, ist es aber vorteilhaft, die Doppelmesser jeweils mit zwei gegenläufig oszillierend bewegbaren Schneiden auszubilden. Ein für die Schneidwirkung und Zerkleinerung des Futtermittelblocks unwirksames Hin- und Herbewegen des Blocks wird somit sicher ausgeschlossen.

Hinsichtlich des Antriebes der Doppelmesser sieht die Erfindung vor, daß diese Doppelmesser hydraulisch durch Kolben-Zylinder-Einheiten antreibbar sind. Solche Kolben-Zylinder-Einheiten sind robust und betriebssicher und zudem relativ einfach von einer an einem landwirtschaftlichen Arbeitsfahrzeug vorhandenen Hydraulikanlage zu versorgen.

Schließlich schlägt die Erfindung noch eine Ausführung der Zerkleinerungs- und Austrageinrichtung vor, die technisch eine Kombination der beiden zuvor beschriebenen Ausführung darstellt und die sich dadurch kennzeichnet, daß in der Zerkleinerungs- und Austrageinrichtung parallel zueinander zwei oder mehr Kratzwellen sowie zwischen diesen jeweils ein Doppelmesser angeordnet sind. In dieser Vorrichtung werden also die mit der Kratzwelle und mit dem Doppelmesser bewirkbare Aufbereitung des Futtermittels kombiniert, was insgesamt eine besonders gründliche Lockerung und Zerkleinerung des Futtermittels ergibt. Damit eignet sich diese zuletzt beschriebene Vorrichtung insbesondere für die Verarbeitung und Aufbereitung von besonders schwierig zu handhabendem Futtermittel, das einerseits besonders langfaserig und andererseits besonders stark kompaktiert ist.

Die neue Vorrichtung eignet sich insbesondere für einen Einsatz in kleineren landwirtschaftlichen Betrieben und bietet bei relativ niedrigen Anschaffungs- und Unterhaltungskosten eine hohe Rentabilität durch ihre vielseitige Einsetzbarkeit. Dabei kann die Vorrichtung sowohl als Anbaugerät für einen Schlepper als auch als selbstfahrendes oder geschlepptes Gerät mit eigenem Fahrgestell ausgeführt sein.

Ein Ausführungsbeispiel der Vorrichtung gemäß der vorliegenden Erfindung wird im folgenden anhand einer Zeichnung erläutert. Die Figuren der Zeichnung zeigen:

| | |
|---|---|
| Figur 1 | eine Vorrichtung in einer ersten Ausführung, in einer ersten Funktionsstellung in Seitenansicht, |
| Figur 2 | die Vorrichtung aus Figur 1 in Rückansicht, |
| Figur 3 | die Vorrichtung in einer zweiten Funktionsstellung in Seitenansicht, |
| Figur 4 | die Vorrichtung in einer dritten Funktionsstellung in Seitenansicht, |
| Figur 5 | einen Kratz- und schneidteller als Teil der Vorrichtung in Aufsicht, |
| Figur 6 | die Vorrichtung aus Figur 4 in Rückansicht, |
| Figur 7 | die Vorrichtung in einer zweiten Ausführung, in ihrer Austragstellung in Seitenansicht, |
| Figur 8 | einen Ausschnitt aus der Vorrichtung gemäß Figur 7 im Schnitt gemäß der Linie VIII - VIII in Figur 7 und |
| Figur 9 | die Vorrichtung in einer ausschnittsweisen Darstellung in einer dritten Ausführung, ebenfalls in Seitenansicht. |

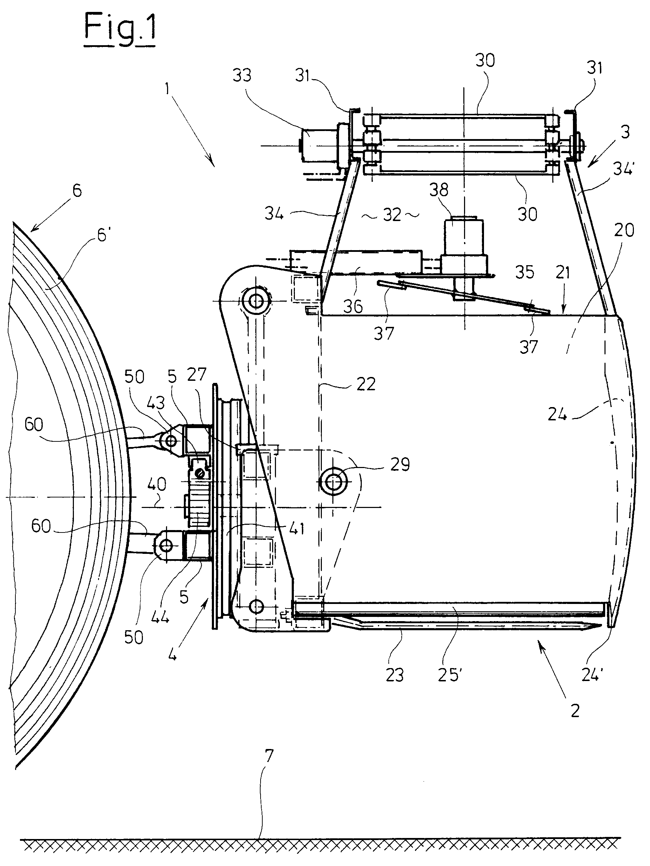

In der Figur 1 der Zeichnung ist ein erstes Ausführungsbeispiel einer Transport- und Austragvorrichtung 1 für einen Futtermittelblock in einer ersten, im folgenden als Grundstellung bezeichneten Funktionsstellung dargestellt. Die Vorrichtung 1 besteht im wesentlichen aus einem kastenförmigen Behälterteil 2, einer daran angebrachten Zerkleinerungs- und Austrageinrichtung 3 und einer Schwenkeinrichtung 4. Der Behälterteil 2 umfaßt eine feste, tragende Rückwand 22, eine Vorderwand 24, zwei Seitenwände, von denen hier die vordere Seitenwand 25 sichtbar ist, und einen Behälterboden, der hier als Zinkenrost 23 ausgebildet ist. Die beiden Seitenwände 25 und 26 (letztere nicht sichtbar) sowie die Vorderwand 24 sind zu einer um eine horizontale, in Querrichtung der Vorrichtung 1, d.h. senkrecht zur Zeichnungsebene, verlaufende Kippachse 29 verkippbaren Baueinheit zusammengefaßt. Für die Erzeugung dieser Kippbewegung sind an der Vorrichtung 1 zwei Kolben-Zylinder-Einheiten 27 und 27' vorgesehen, die parallel zur Rückwand 22 angeordnet sind und von denen in der Figur 1 die vordere Kolben-Zylinder-Einheit 27 teilweise sichtbar ist.

Mit der aus den Seitenwänden 25 und 26 sowie der Vorderwand 24 gebildeten Baueinheit ist die Zerkleinerungs- und Austrageinrichtung 3 starr verbunden, wobei die Einrichtung 3 in der hier dargestellten Grundstellung der Vorrichtung 1 oberhalb des Behälterteils 2 vor dessen offener Seite 21 liegt. Die Zerkleinerungs- und Austrageinrichtung 3 umfaßt im dargestellten Ausführungsbeispiel zwei Schneid- und Kratzteller 35, von denen hier einer sichtbar ist. Der Kratz- und Schneidteller 35 ist über der offenen Seite 21 des Behälterteils 2 angeordnet und als um eine vertikale Drehachse mittels eines Antriebsmotors 38 drehbare Taumelscheibe ausgebildet. Radial außenseitig trägt der Schneid- und Kratzteller an seiner dem Behälterteil 2 zugewandten Seite mehrere Schneidmesser 37. Der Antriebsmotor 38 für den Kratz- und Schneidteller 35 ist an einem Tragarm 36 angebracht, welcher seinerseits fest mit der Rückwand 22 des Behälterteils 2 verbunden ist. Im Abstand von dem Kratz- und Schneidteller 35, d.h. in der Figur 1 oberhalb davon, ist ein Förderband 30 vorgesehen, das in Querrichtung der Vorrichtung 1, d.h. senkrecht zur Zeichnungsebene läuft. Seitlich ist das Förderband 30 an einem Förderbandrahmen 31 gehaltert, bzw. gelagert, welcher seinerseits über zwei in Querrichtung der Vorrichtung 1 verlaufende Führungsbleche 34 und 34' mit dem Behälterteil 2 verbunden ist. Zum Antrieb des Förderbandes ist ein weiterer Antriebsmotor 33 vorgesehen. Das hintere, d.h. in Figur 1 linke Führungsblech 34 verläuft im wesentlich in Verlängerung der Rückwand 22, ist aber nicht mit dieser sondern mit den beiden Seitenwänden 25 und 26 verbunden. Das vordere, d.h. in Figur 1 rechte Führungsblech 34' verläuft in Verlängerung der Vorderwand 24 des Behälterteils 2 und ist mit dieser verbunden.

Die an der Rückseite, d.h. in der Figur 1 linken Seite der Vorrichtung 1 angeordnete Schwenkeinrichtung 4 besteht im wesentlichen aus einem Schwenklager 41 mit einer horizontalen, in Längsrichtung der Vorrichtung 1, d.h. in der Zeichnungsebene der Figur 1 verlaufenden Schwenkachse 40. Weiterhin gehört zur Schwenkeinrichtung 4 eine Zahnstange 43, die mit einem Zahnrad 44 kämmt. Die Zahnstange 43 ist an einem an der behälterabgewandten Seite des Schwenklagers 41 angeordneten Rahmen 5 in axialer Richtung quer zur Vorrichtung 1, d.h. senkrecht zur Zeichnungsebene der Figur 1, verschieblich gelagert. Zur Verschiebung dient eine Kolben-Zylinder-Einheit 42, die in der Figur 1 nicht sichtbar ist. Das Zahnrad 44 ist drehfest mit dem von dem Rahmen 5 abgewandten, gegenüber diesem verdrehbaren Teil des Schwenklagers 41 verbunden. Durch Verschieben der Zahnstange 43 wird also eine Verschwenkung des Behälterteils 2 zusammen mit der Zerkleinerungs- und Austrageinrichtung 3 um die Schwenkachse 40 bewirkt. Der Winkel der Verschwenkbarkeit beträgt dabei vorzugsweise 180°.

An dem Rahmen 5 sind schließlich noch Verbindungsmittel 50, hier Anschlaglaschen, vorgesehen, die zur lösbaren Verbindung der Vorrichtung 1 mit der Dreipunktkupplung 60 eines Traktors 6, von dem hier nur ein Hinterrad 6' angedeutet ist, dienen. Anstelle eines Traktors 6 kann auch eine andere landwirtschaftliche Arbeitsmaschine zur Anbringung der Vorrichtung 1 verwendet werden; auch kann die Vorrichtung 1 an den Frontladerarmen eines landwirtschaftlichen Arbeitsfahrzeuges montiert werden.

In der in Figur 1 dargestellten Grundstellung der Vorrichtung 1 kann ein Futtermittelblock im Inneren 20 des Behälterteils 2 transportiert werden, wobei der Zinkenrost 23 dem Untergrund 7 zugewandt ist und durch eine Hubeinrichtung des Traktors 6 bis auf diesen Untergrund 7 abgesenkt sowie für Transportzwecke in eine ausreichende Höhe angehoben werden kann. Die Zerkleinerungs- und Austrageinrichtung 3 liegt in dieser Grundstellung der Vorrichtung 1 an der vom Untergrund 7 abgewandten Vorrichtungsseite.

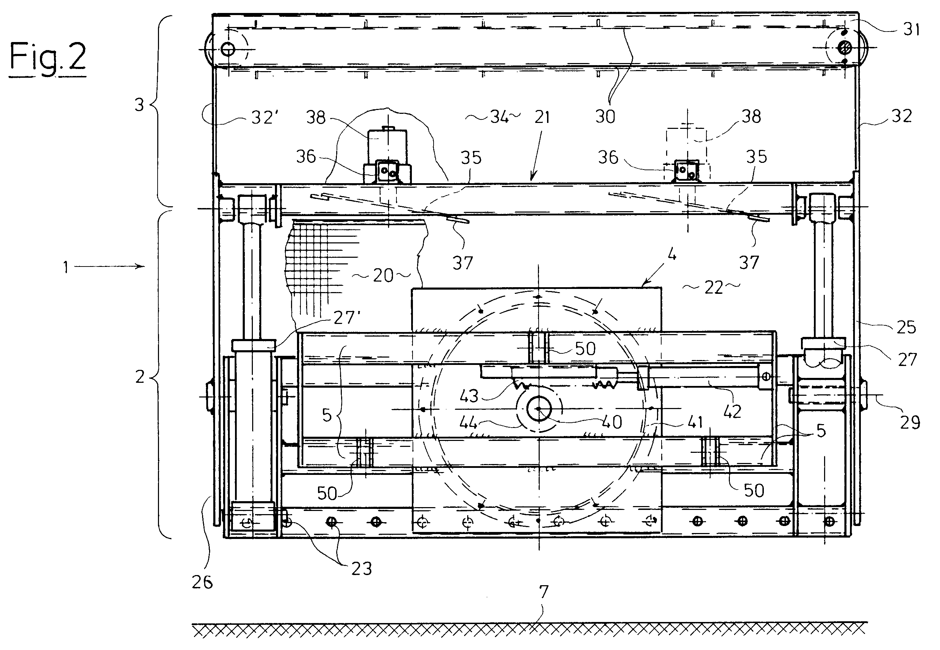

In der Figur 2 der Zeichnung ist die Vorrichtung 1 in der gleichen Stellung wie in Figur 1, d.h. ebenfalls in der Grundstellung, dargestellt, wobei hier eine Rückansicht, d.h. eine Ansicht auf die in Figur 1 linke Seite der Vorrichtung 1 gezeigt ist. Den unteren Teil der Vorrichtung 1 bildet der Behälterteil 2, oberhalb dessen die Zerkleinerungs- und Austrageinrichtung 3 angeordnet ist. Das Innere 20 des Behälterteils 2 wird von den hier sichtbaren Seitenwänden 25 und 26 zu den Seiten hin sowie durch den Zinkenrost 23 nach unten hin und durch die Rückwand 22 nach hinten hin, d.h. zu der dem Betrachter zugewandten Seite hin, begrenzt. Die Vorderwand 24 ist in dieser Darstellung nicht sichtbar. In der dem Betrachter zugewandten Seite der Rückwand 22 ist der tragende Rahmen 5 mit den Verbindungsmitteln 50 zur Anbringung der Vorrichtung 1 an einem hier nicht sichtbaren Traktor angeordnet. Zwischen diesem Rahmen 5 und der Rückwand 22 des Behälterteils 2 ist die Schwenkeinrichtung 4 plaziert, deren Schwenkachse 40 nun senkrecht zur Zeichnungsebene verläuft. Konzentrisch zur Schwenkachse 40 liegt das Zahnrad 44, das mit der Zahnstange 43 kämmt, die horizontal in Querrichtung der Vorrichtung 1, d.h. in der Zeichnungsebene, mittels der Kolben-Zylinder-Einheit 42 verschiebbar ist.

Am rechten und linken Außenrand der Rückwand 22 ist je eine Kolben-Zylinder-Einheit 27 und 27' erkennbar, die jeweils mit ihrem unteren Ende mit der Rückwand 22 und mit ihrem oberen Ende mit den Seitenwänden 25 bzw. 26 verbunden ist. Durch Betätigen dieser Kolben-Zylinder-Einheiten 27 bzw. 27' kann die aus der Vorderwand 24 und den Seitenwänden 25 und 26 sowie der Zerkleinerungs- und Austrageinrichtung 3 bestehende Baueinheit der Vorrichtung 1 um die Kippachse 29, die ebenfalls horizontal in Querrichtung der Vorrichtung 1, d.h. in der Zeichnungsebene, verläuft, verkippt werden.

Im Bereich der oberhalb des Behälterteils 2 liegenden Zerkleinerungs- und Austrageinrichtung 3 fällt der Blick des Betrachters auf das in Figur 1 linke Führungsblech 34, hinter welchem die beiden Schneid- und Kratzteller 35 mit ihrem Antriebsmotor 38 und dem jeweils zugehörigen Tragarm 36 erkennbar sind, welche oberhalb der offenen Seite 21 des Behälterteils 2 positioniert sind. Am äußersten rechten und linken Ende der Zerkleinerungs- und Austrageinrichtung 3 ist jeweils eine Austragöffnung 32 bzw. 32' vorgesehen. Nach oben hin wird hier die Zerkleinerungs- und Austrageinrichtung 3 durch das Förderband 30 mit seinem Förderbandrahmen 31 begrenzt.

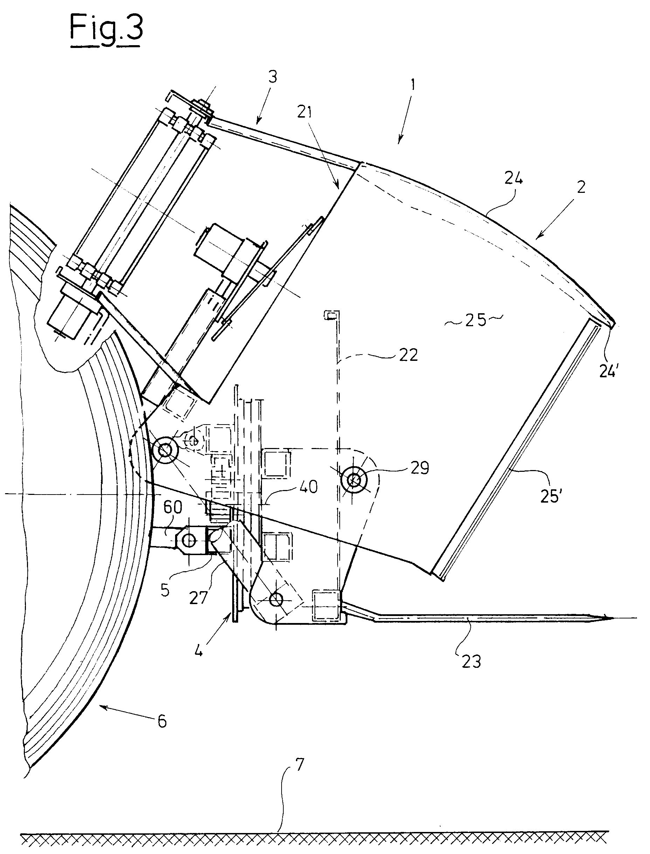

Unterhalb der Vorrichtung 1, d.h. unterhalb des Zinkenrostes 23 ist wieder der Untergrund 7 angedeutet. In Figur 3 ist die Vorrichtung 1 in einer zweiten Funktionsstellung gezeigt, welche im folgenden als Aufnahmestellung bezeichnet wird. In dieser Aufnahmestellung ist durch Einfahren der Kolben-Zylinder-Einheiten 27, 27' die aus der Vorderwand 24 und den Seitenwänden 25 und 26 sowie der Zerkleinerungs- und Austrageinrichtung 3 bestehende Baueinheit um die Kippachse 29 gegen den Uhrzeigersinn verkippt. Durch diese Verkippung werden die Vorderwand 24 sowie die Seitenwände 25 und 26 nach oben hin angehoben, wodurch die Vorderseite des Behälterteils 2, d.h. in Figur 3 dessen rechte Seite, freigegeben wird. In dieser Aufnahmestellung der Vorrichtung 1 kann der Zinkenrost 23 durch horizontales Verfahren in Richtung der Zinkenspitzen in einen Futtermittelvorrat eingestochen werden. Durch anschließendes Zurückkippen der verkippbaren Baueinheit im Uhrzeigersinn mittels Ausfahrens der Kolben-Zylinder-Einheiten 27, 27' kann nun ein Futtermittelblock aus dem Futtermittelvorrat ausgeschnitten werden. Zur Erleichterung dieses Schneidvorganges sind die Vorderwand 24 und die Seitenwände 25 und 26 jeweils mit Schneidleisten 24', 25' bzw. 26' an ihren Unterkanten ausgebildet. Nach dem Zurückkippen der verkippbaren Baueinheit befindet sich also ein Futtermittelblock im Inneren 20 des Behälterteils 2, der nun wieder bis auf seine offene Oberseite 21 allseitig geschlossen ist. Die Schwenkeinrichtung 4 ist an diesem Schneidvorgang nicht beteiligt und behält während dieses Vorganges ihre Stellung bei. Die Höhenlage der Vorrichtung 1 und damit die Entnahmehöhe des Futtermittelblocks aus dem Futtermittelvorrat kann durch Veränderung der Höhenlage der Dreipunktkupplung 60 des Traktors 6 festgelegt werden. Unterhalb der Vorrichtung 1 ist der Untergrund 7 sichtbar, wobei die Vorrichtung 1 wieder mit dem Zinkenrost 23 dem Untergrund 7 zugewandt ist.

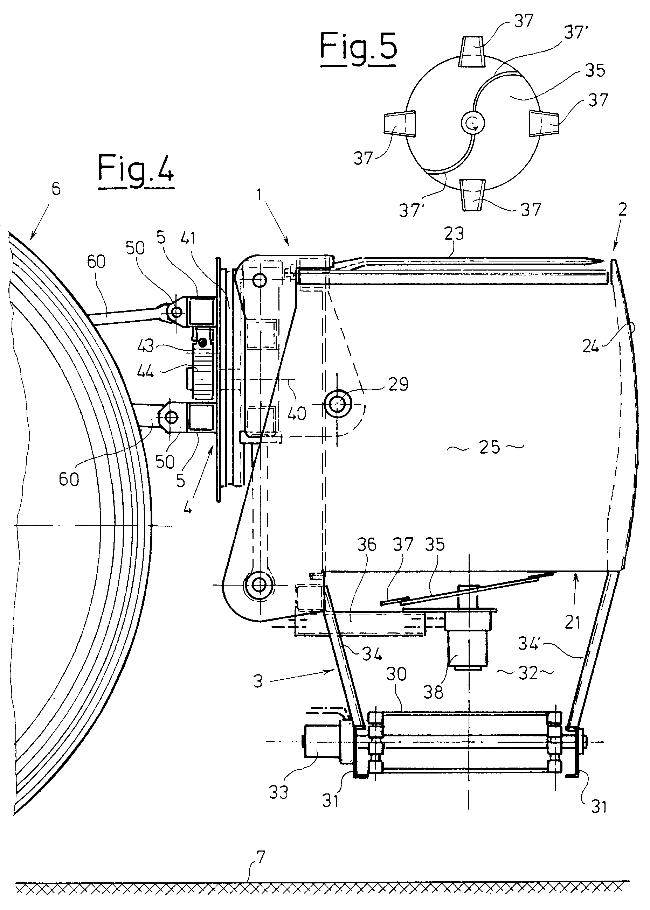

Figur 4 der Zeichnung zeigt die Vorrichtung 1 in einer dritten Funktionsstellung, die im folgenden als Austragstellung bezeichnet wird. Diese Austragstellung der Vorrichtung 1 wird durch Verschwenken des verschwenkbaren Teils der Vorrichtung 1 um die horizontale Schwenkachse 40 mittels der Schwenkeinrichtung 4 erreicht. Zur Bewirkung dieser Verschwenkung wird die Kolben-Zylinder-Einheit 42 betätigt, d.h. die hiermit verbundene Zahnstange 43 wird aus ihren einen Endstellung axial in ihre andere Endstellung verfahren. Hierdurch wird das Zahnrad 44 um eine halbe Umdrehung gedreht, wodurch sich die Verschwenkung um 180° ergibt. Die Vorrichtung 1 ist dabei zusammen mit dem in dessen Behälterteil 2 befindlichen Futtermittelblock soweit angehoben, daß bei der Verschwenkung keine Teile der Vorrichtung 1 mit dem Untergrund 7 in Berührung kommen können. Die erforderliche Höhe der Vorrichtung 1 kann wieder durch Höhenverstellung der Dreipunktkupplung 60 des Traktors 6 eingestellt werden.

In der Austragstellung der Vorrichtung 1, in der deren verschwenkbarer Teil anschaulich gesagt "auf den Kopf" gedreht ist, bildet nun der Behälterteil 2 den oberen Teil und die Zerkleinerungs- und Austrageinrichtung 3 den unteren Teil der Vorrichtung 1. Die Zerkleinerungs- und Austrageinrichtung 3 liegt nun unterhalb der offenen Seite 21 des Behälterteils 2, aus dessen Innerem 20 der darin befindliche Futtermittelblock nun unter Schwerkraftwirkung der Zerkleinerungs- und Austrageinrichtung 3 zugeführt wird. Mittels der Schneid- und Kratzteller 35, die nun durch ihre Antriebsmotoren 38 in Drehung versetzbar sind, wird von der nun nach unten weisenden Seite des Futtermittelblocks, der in den Figuren nicht eigens dargestellt ist, mittels der Schneidmesser 37 nach und nach Futtermittel abgetragen, das dann unter Schwerkraftwirkung auf das Förderband 30 fällt. Das Förderband 30 wird durch seinen Antriebsmotor 33 in Bewegung versetzt, wobei hier je nach Laufrichtung des Motors 33 die eine oder die andere Laufrichtung des Förderbandes 30 und damit die eine oder andere Austragrichtung der Vorrichtung 1 gewählt werden kann. Das von dem Futtermittelblock mittels der Schneid- und Kratzteller 35 abgetragene Futtermittel wird durch die beiden Führungsbleche 34 und 34' zur Oberseite des an sich schmaleren Förderbandes 30 geführt, so daß Futtermittelverluste weitgehend ausgeschlossen sind.

In dieser Austragstellung der Vorrichtung 1 ist also die Zerkleinerungs- und Austrageinrichtung 3 dem Untergrund 7 zugewandt und es kann in dieser Austragstellung das Futtermittel unter langsamer Fahrt des Traktors 6 unmittelbar wahlweise zur einen oder anderen Seite in Futtertröge ausgetragen werden. Zum Schutz des Bedienungspersonals vor Verletzungen können die Austragöffnungen 32 und 32' an der Zerkleinerungs- und Austrageinrichtung 3 mittels hier nicht eigens dargestellter, elastisch-flexibler Abdeckungen gegen einen Eingriff von außen geschützt sein.

Figur 5 der Zeichnung zeigt einen der Schneid- und Kratzteller 35 als Teil der Zerkleinerungs- und Austrageinrichtung 3 in Aufsicht. Wie die Figur 5 zeigt, ist der Schneid- und Kratzteller 35 um seine Mittelachse in Drehung versetzbar und trägt radial außenseitig über seinen Umfang verteilt mehrere, hier insgesamt vier Schneidmesser 37, die beidseitig mit Schneiden versehen sind. Durch Wenden der Schneidmesser 37 können diese mit ihrer zweiten Schneide zum Einsatz gebracht werden, so daß sich eine längere Standzeit ergibt, bevor ein Nachschleifen oder Austauschen der Schneidmesser 37 erforderlich ist. Zusätzlich ist der hier gezeigte Schneid- und Kratzteller an seiner Oberseite, d.h. an seiner dem Futtermittelblock zugewandten Seite, mit einer Kratzleiste 37' versehen, die S-förmig gebogen ist und durch den Mittelpunkt des Tellers 35 verläuft. Dabei verläuft jeweils die konvexe Wölbung der Kratzleiste 37 in Drehrichtung nach vorn, so daß sich ein Transport von auf die Oberseite des Tellers 35 fallendem Futtermittel radial nach außen hin ergibt. Da außerdem der Schneid- und Kratzteller 35 gekippt auf seiner Drehachse angeordnet ist, d.h. als Taumelscheibe ausgebildet ist, ergibt sich bei Drehung des Schneid- und Kratztellers 35 eine wirksame Lockerungs- und Zerkleinerungsbewegung, die ein gleichmäßiges Abtragen und Lockern von Futtermittel vom Futtermittelblock sicherstellt.

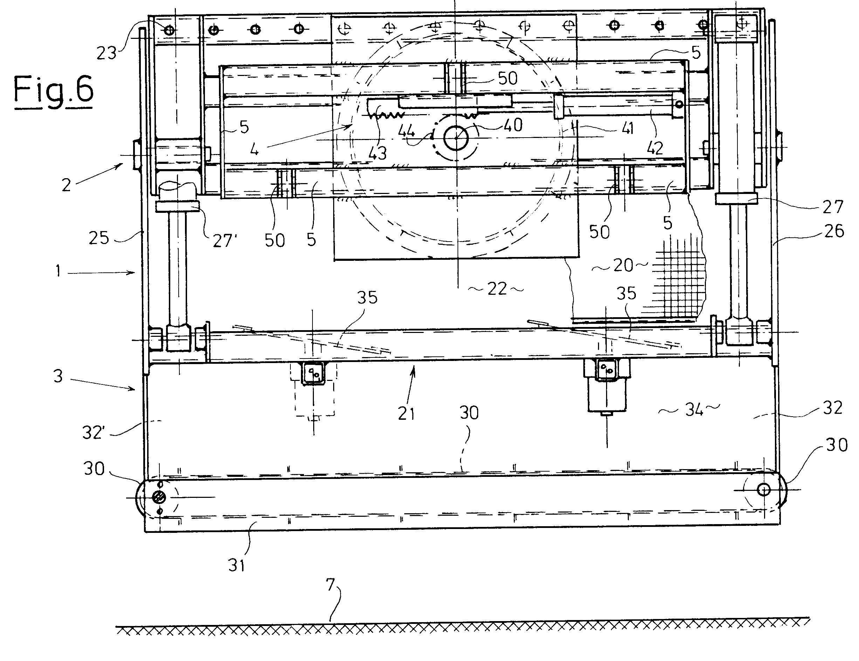

Figur 6 der Zeichnung schließlich zeigt die Vorrichtung 1 in derselben Stellung wie die Figur 4, nun aber wieder in Rückansicht. Bezüglich der Erläuterung der einzelnen Teile der Vorrichtung 1 wird auf die Beschreibung der Figur 2 verwiesen, wobei jeweils die Lageangaben oben und unten bzw. links und rechts zu vertauschen sind, da die Vorrichtung 1 insgesamt um die Schwenkachse 40 um 180° in der Zeichnungsebene der Figur 6 verschwenkt ist. Dementsprechend ist nun auch die Zahnstange 43, die mit dem Zahnrad 44 kämmt, in ihrer zweiten Endstellung gezeichnet.

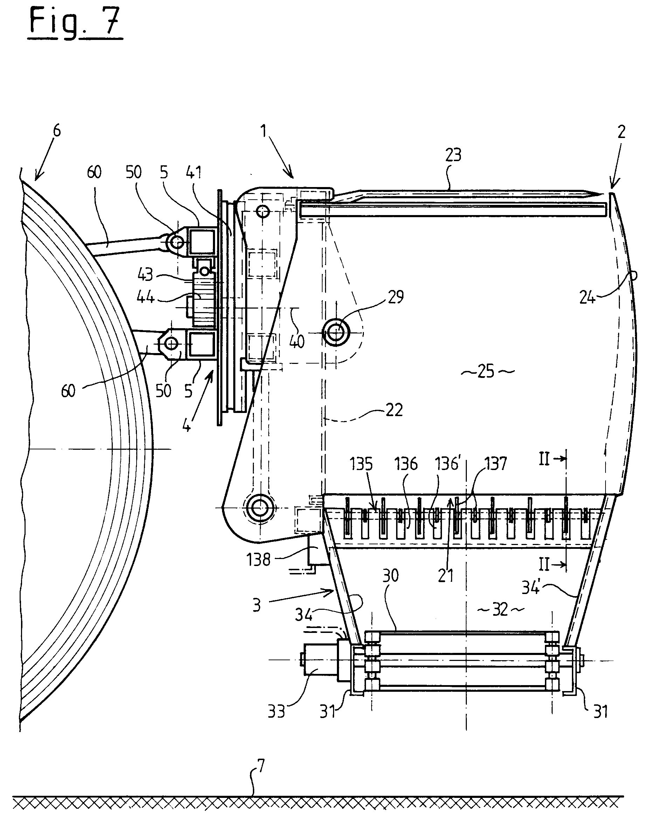

In der Figur 7 der Zeichnung ist ein zweites Ausführungsbeispiel der Transport- und Austragvorrichtung 1 für einen Futtermittelblock in einer im folgenden als Austragstellung bezeichneten Funktionsstellung dargestellt. Die Vorrichtung 1 besteht auch hier im wesentlichen aus dem kastenförmigen Behälterteil 2, der daran angebrachten Zerkleinerungs- und Austrageinrichtung 3 und der Schwenkeinrichtung 4. Der Behälterteil umfaßt wieder die feste, tragende Rückwand 22, die Vorderwand 24, die zwei Seitenwände, von denen hier die vordere Seitenwand 25 sichtbar ist, und den Behälterboden, der hier ebenfalls als Zinkenrost 23 ausgebildet ist. Die beiden Seitenwände sowie die Vorderwand 24 sind zu der um eine horizontale, in Querrichtung der Vorrichtung 1, d.h. senkrecht zur Zeichnungsebene, verlaufende Kippachse 29 verkippbaren Baueinheit zusammengefaßt. Für die Erzeugung dieser Kippbewegung sind auch an der Vorrichtung 1 gemäß Figur 7 zwei Kolben-Zylinder-Einheiten vorgesehen, die parallel zur Rückwand 22 verdeckt angeordnet sind.

Mit der aus den Seitenwänden 25 sowie der Vorderwand 24 gebildeten Baueinheit ist die Zerkleinerungs- und Austrageinrichtung 3 starr verbunden, wobei die Einrichtung 3 in der hier dargestellten Austragstellung der Vorrichtung 1 unterhalb des Behälterteils 2 vor dessen offener Seite 21 liegt. Die Zerkleinerungs- und Austrageinrichtung 3 umfaßt im hier dargestellten Ausführungsbeispiel mehrere Kratzwellen 135, von denen hier eine sichtbar ist. Die Kratzwelle 135 ist unter der offenen Seite 21 des Behälterteils 2 angeordnet und als um eine horizontale Drehachse mittels eines Antriebsmotors 138 drehbare Welle mit Kratzzinken 137 ausgebildet. Die Kratzwelle 135 ist an ihren Enden drehbar gelagert und so mit dem übrigen Teil der Vorrichtung 1 verbunden. Oberseitig sowie seitlich von der Kratzwelle 135 ist eine Abdeckung 136 angebracht, die aus einem im Querschnitt U-förmig gebogenen Blech besteht, welches eine Anzahl von parallel zueinander verlaufenden Schlitzen 136' aufweist, die einen Durchgang der Kratzzinken 137 gestatten. Die seitlichen Teile der Abdeckung 136 sind dabei soweit nach unten gezogen, daß die Abdeckung dort einen durchgehenden Blechstreifen bildet und die Kratzzinken 137 nach unten hin, d.h. zum Förderband 30 hin, überragt. Wie aus der Figur 7 deutlich ersichtlich ist, ragen die Kratzzinken 137 nach oben hin durch die Schlitze 136' aus der Abdeckung 136 hervor, während sie nach unten von der Abdeckung verdeckt werden. Die Abdeckung 136 hat die Funktion eines Abstreifers für von den Kratzzinken 137 bei Drehung der Kratzwelle 135 von einem aufliegenden Futtermittelblock abgezogenen Futtermittelfasern, wodurch erreicht wird, daß diese Futtermittelfasern sich nicht um die Kratzwelle 135 herumwickeln können sondern unabhängig von ihrer Länge zuverlässig zum Förderband 30 geleitet werden. Der Antriebsmotor 138 für die Kratzwelle 135 ist am einen Ende der Kratzwelle 135 angeordnet.

Im Abstand von der Kratzwelle 135, d.h. in der Figur 7 unterhalb davon, ist ein Förderband 30 vorgesehen, dessen Förderrichtung in Querrichtung der Vorrichtung 1, d.h. senkrecht zur Zeichnungsebene verläuft. Seitlich ist das Förderband 30 an einem Förderbandrahmen 31 gehaltert bzw. gelagert, welcher seinerseits über zwei in Querrichtung der Vorrichtung 1 verlaufende Führungsbleche 34 und 34' mit dem Behälterteil 2 verbunden ist. Zum Antrieb des Förderbandes ist ein weiterer Antriebsmotor 33 vorgesehen. Das hintere, d.h. in Figur 7 linke Führungsblech 34 verläuft im wesentlichen in Verlängerung der Rückwand 22, ist aber nicht mit dieser sondern mit den beiden Seitenwänden 25 verbunden. Das vordere, d.h. in Figur 1 rechte Führungsblech 34' verläuft in Verlängerung der Vorderwand 24 des Behälterteils 2 und ist mit dieser verbunden.

Die an der Rückseite, d.h. in der Figur 7 linken Seite der Vorrichtung 1 angeordnete Schwenkeinrichtung 4 besteht im wesentlichen aus einem Schwenklager 41 mit einer horizontalen, in Längsrichtung der Vorrichtung 1, d.h. in der Zeichnungsebene der Figur 7 verlaufenden Schwenkachse 40. Weiterhin gehört zur Schwenkeinrichtung 4 eine Zahnstange 43, die mit einem Zahnrad 44 kämmt. Die Zahnstange 43 ist an einem an der behälterabgewandten Seite des Schwenklagers 41 angeordneten Rahmen 5 in axialer Richtung quer zur Vorrichtung 1, d.h. senkrecht zur Zeichnungsebene der Figur 7, verschieblich gelagert. Zur Verschiebung dient eine Kolben-Zylinder-Einheit, die in der Figur 7 nicht sichtbar ist. Das Zahnrad 44 ist drehfest mit dem von dem Rahmen 5 abgewandten, gegenüber diesem verdrehbaren Teil des Schwenklagers 41 verbunden. Durch Verschieben der Zahnstange 43 wird also eine Verschwenkung des Behälterteils 2 zusammen mit der Zerkleinerungs- und Austrageinrichtung 3 um die Schwenkachse 40 bewirkt. Der Winkel der Verschwenkbarkeit beträgt dabei auch hier vorzugsweise 180°.

An dem Rahmen 5 sind schließlich noch Verbindungsmittel 50, hier Anschlaglaschen, vorgesehen, die zur lösbaren Verbindung der Vorrichtung 1 mit der Dreipunktkupplung 60 eines Traktors 6, von dem hier nur ein Hinterrad 6' angedeutet ist, dienen. Anstelle eines Traktors 6 kann auch eine andere landwirtschaftliche Arbeitsmaschine zur Anbringung der Vorrichtung 1 verwendet werden; auch kann die Vorrichtung 1 an den Frontladerarmen eines landwirtschaftlichen Arbeitsfahrzeuges montiert werden.

In der dargestellten Austragstellung der Vorrichtung 1, in der deren verschwenkbarer Teil anschaulich gesagt "auf den Kopf" gedreht ist, bildet der Behälterteil 2 den oberen Teil und die Zerkleinerungs- und Austrageinrichtung 3 den unteren Teil der Vorrichtung 1. Die Zerkleinerungs- und Austrageinrichtung 3 liegt unterhalb der offenen Seite 21 des Behälterteils 2, aus dessen Innerem 20 ein darin befindlicher Futtermittelblock nun unter Schwerkraftwirkung der Zerkleinerungs- und Austrageinrichtung 3 zugeführt wird. Mittels der Kratzwellen 135, die nun durch ihre Antriebsmotoren 138 in Drehung versetzt sind, wird von der nun nach unten weisenden Seite des Futtermittelblocks, der in den Figuren nicht eigens dargestellt ist, nach und nach Futtermittel abgetragen, das dann unter Schwerkraftwirkung auf das Förderband 30 fällt. Das Förderband 30 wird durch seinen Antriebsmotor 33 in Bewegung versetzt, wobei hier je nach Laufrichtung des Motors 33 die eine oder die andere Laufrichtung des Förderbandes 30 und damit die eine oder andere Austragrichtung der Vorrichtung 1 gewählt werden kann. Das von dem Futtermittelblock mittels der Kratzwellen 135 abgetragene Futtermittel wird durch die beiden Führungsbleche 34 und 34' zur Oberseite des an sich schmaleren Förderbandes 30 geführt, so daß Futtermittelverluste weitgehend ausgeschlossen sind. In dieser Austragstellung der Vorrichtung 1 ist also die Zerkleinerungs- und Austrageinrichtung 3 dem Untergrund 7 zugewandt und es kann das Futtermittel unter langsamer Fahrt des Traktors 6 unmittelbar wahlweise zu einen oder anderen Seite in Futtertröge ausgetragen werden.

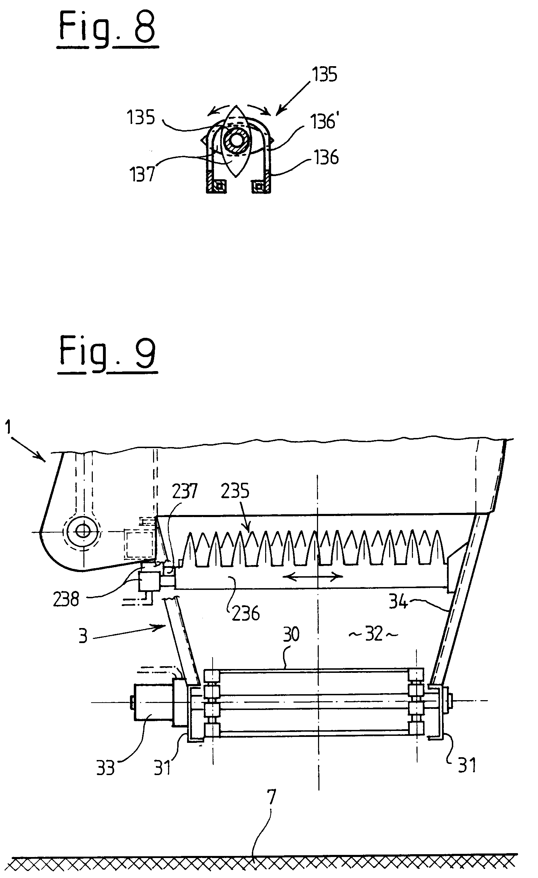

Aus dem in Figur 8 dargestellten Querschnitt entsprechend der Linie VIII - VIII in Figur 7 wird besonders die spitz-elliptische Form der Kratzzinken 137 sowie die U-Form der Abdeckung 136 deutlich. Außerdem ist in der Figur 8 einer der Schlitze 136' in der Abdeckung 136 sichtbar, durch welche der hier vordere Kratzzinken 137 umläuft. Im Hintergrund ist ein um 90° versetzt auf der Kratzwelle 135 angeordneter zweiter Kratzzinken 137 sichtbar. Die Kratzwelle 135 ist wahlweise in der einen oder der anderen Drehrichtung betreibbar, wie durch die beiden Pfeile oberhalb der Kratzwelle 135 angedeutet ist. Aufgrund der spitz-elliptischen Umrißform der Kratzzinken 137 wird zwar Futtermittel von einer Futtermittelblockunterseite sicher gelöst, jedoch kann das Futtermittel auch bei Vorliegen von langen Futtermittelfasern nicht in die Schlitze 136' der Abdeckung 136 hineingezogen werden, weil zwischen der Abdeckung 136 und dem Umriß der Kratzzinken 137 immer ein stumpfer Winkel gebildet wird.

Figur 9 der Zeichnung schließlich zeigt ein drittes Ausführungsbeispiel der Vorrichtung 1, wobei diese hier nur ausschnittsweise mit ihrer Zerkleinerungs- und Austrageinrichtung 3 dargestellt ist. Den unteren Teil der Zerkleinerungs- und Austrageinrichtung 3 bildet hier wieder ein Förderband 30 mit seinen zuvor anhand von Figur 1 und Figur 7 beschriebenen Teilen.

Oberhalb des Förderbandes 30 ist hier im Unterschied zu dem vorangehend beschriebenen Ausführungsbeispiel eine Anzahl von Doppelmessern 235 parallel zueinander und quer zur Förderrichtung des Förderbandes 30 angeordnet, wobei hier eines der Doppelmesser 235 sichtbar ist. Jedes Doppelmeser 235 besteht aus zwei gegenläufig bewegbaren Schneiden 236 und 237, die jeweils mit aneinander anliegenden, zusammenwirkenden Schneidzähnen versehen sind. Die Schneiden 236 und 237 sind dabei in einer vertikalen Ebene angeordnet und weisen mit ihren Schneidzähnen in der hier gezeigten Austragstellung nach oben, d.h. zur Unterseite eines aufliegenden Futtermittelblocks hin. Mittels Kolben-Zylinder-Einheiten 238 sind jeweils die beiden Schneiden 236 und 237 der Doppelmesser 235 in eine gegenläufige oszillierende Bewegung versetzbar, wie durch den Bewegungspfeil an der vorderen Schneide 236 angedeutet ist. Eine der Schneiden 236, 237 kann auch feststehend sein. Durch die Schneidbewegung wird zum einen der aufliegende Futtermittelblock von seiner Unterseite her gelockert und zum anderen werden die Fasern des Futtermittels, insbesondere bei Vorliegen von großen Faserlängen, wirkungsvoll zerschnitten und somit für die Verfütterung vorteilhaft gekürzt. Die gelockerten und zerschnittenen Fasern des Futtermittels fallen dann, wie zuvor schon beschrieben, unter Schwerkraftwirkung auf das unten liegende Förderband 30 und können durch dieses zu der einen oder anderen Seite der Vorrichtung 1 ausgetragen und z.B. in Futtertröge abgeworfen werden.

Außer wie in den hier gezeigten Ausführungsbeispielen mit entweder Kratzwellen 135 oder Doppelmessern 235 kann die Vorrichtung 1 auch kombiniert zugleich mit Kratzwellen 135 und Doppelmessern 235 ausgeführt werden, wobei dann vorzugsweise abwechselnd je eine Kratzwelle 135 und ein Doppelmesser 235 paarweise nebeneinander quer zur Förderrichtung des Förderbandes 30 an der Vorrichtung 1 vorgesehen sind.

**Patentansprüche**

1. Transport- und Austragvorrichtung für einen Futtermittelblock, wobei die Vorrichtung (1) einen Behälterteil (2) zur Aufnahme des Futtermittelblocks und eine mit dem Behälterteil (2) verbundene Zerkleinerungs- und Austrageinrichtung (3) umfaßt, dadurch gekennzeichnet,
   - daß in einer dem Transport des Futtermittelblocks dienenden Grundstellung der Vorrichtung (1) der Behälterteil (2) mit einer offenen Seite (21) nach oben weisend und die Zerkleinerungs- und Austrageinrichtung (3) oberhalb dieser offenen Seite (21) des Behälterteils (2) angeordnet ist und
   - daß der Behälterteil (2) zusammen mit der Zerkleinerungs- und Austrageinrichtung (3) um eine im wesentlichen horizontale Schwenkachse (40) um etwa 180° verschwenkbar ist in eine Austragstellung, in welcher die offene Seite (21) des Behälterteils (2) nach unten weist, in welcher die Zerkleinerungs- und Austrageinrichtung (3) unterhalb dieser offenen Seite (21) liegt und in welcher der im Behälterteil (2) befindliche Futtermittelblock durch Schwerkraftwirkung der Zerkleinerungs- und Austrageinrichtung (3) von oben her zugeführt wird.

2. Vorrichtung nach Anspruch 1, dadurch gekennzeichnet, daß der Behälterteil (2) eine Schneideinrichtung (24', 25', 26') für das Ausschneiden eines Futtermittelblocks aus einem Futtermittelvorrat aufweist.

3. Vorrichtung nach Anspruch 1 oder 2, dadurch gekennzeichnet, daß der Behälterteil (2) eine Vorderwand (24) und zwei flache Seitenwände (25, 26) aufweist und daß die Vorderwand (24) und die Seitenwände (25, 26) zusammen mit der Zerkleinerungs- und Austrageinrichtung (3) als Baueinheit um eine horizontale, in Querrichtung der Vorrichtung (1) verlaufende Kippachse (29) zur Freigabe der Vorderseite des Behälterteils (2) nach oben und zum Verschließen der Vorderseite des Behälterteils (2) nach Aufnahme des Futtermittelblocks nach unten verkippbar sind.

4. Vorrichtung nach Anspruch 3, dadurch gekennzeichnet, daß an den Unterkanten der Vorderwand (24) und der Seitenwände (25, 26) Schneidleisten (24', 25', 26') angeordnet sind, daß die Unterseite des Behälterteils (2) als Zinkenrost (23) ausgebildet ist und daß über einen Kraftantrieb (27, 27') mittels Verkippens der Baueinheit aus Vorderwand (24), Seitenwänden (25, 26) und Zerkleinerungs- und Austrageinrichtung (3) nach unten hin der Futtermittelblock aus dem Futtermittelvorrat ausschneidbar ist.

5. Vorrichtung nach einem der Ansprüche 1 bis 4, gekennzeichnet durch Verbindungsmittel (50) zum Anbau der Vorrichtung (1) an die an einem landwirtschaftlichen Arbeitsfahrzeug (6) vorhandenen Kupplungseinrichtungen (60).

6. Vorrichtung nach einem der Ansprüche 1 bis 4, dadurch gekennzeichnet, daß die Vorrichtung (1) auf einem eigenen Fahrgestell angeordnet ist.

7. Vorrichtung nach einem der Ansprüche 1 bis 6, dadurch gekennzeichnet, daß die Schwenkachse (40) in Längsrichtung der Vorrichtung (1) verläuft.

8. Vorrichtung nach einem der Ansprüche 1 bis 7, dadurch gekennzeichnet, daß der Behälterteil (2) mit einer festen, tragenden Rückwand (22) ausgebildet ist, daß an der Rückwand (22) eine die Verschwenkung um die Schwenkachse (40) erlaubende Schwenkeinrichtung (4) angeordnet ist und daß an dem von der Rückwand (22) abgewandten Teil (5) der Schwenkeinrichtung (4) die Verbindungsmittel (50) für den Anbau der Vorrichtung (1) an dem Arbeitsfahrzeug (6) oder für die Verbindung der Vorrichtung (1) mit ihrem Fahrgestell angeordnet sind.

9. Vorrichtung nach einem der Ansprüche 1 bis 8, dadurch gekennzeichnet, daß die Verschwenkung um die Schwenkachse (40) mittels eines Schwenklagers (41) mit einem fernbetätigbaren Schwenkantrieb (42, 43, 44) bewirkbar ist.

10. Vorrichtung nach Anspruch 9, dadurch gekennzeichnet, daß der Schwenkantrieb aus einer durch mindestens eine Kolben-Zylinder-Einheit (42) axial verschiebbaren Zahnstange (43) am unverschwenkbaren Teil der Vorrichtung (1) und aus einem mit dieser Zahnstange (43) kämmenden, mit dem verschwenkbaren Teil der Vorrichtung (1) drehfest verbundenen Zahnrad (44) besteht.

11. Vorrichtung nach einem der Ansprüche 1 bis 10, dadurch gekennzeichnet, daß die Zerkleinerungs- und Austrageinrichtung (3) aus einem im Abstand zur offenen Seite (21) des Behälterteils (2) in Querrichtung der Vorrichtung (1) verlaufenden Förderband (30) und aus wenigstens einem zwischen dem Förderband (30) und dem Behälterteil (2) angeordneten, in Drehung um eine im wesentlichen vertikale Achse versetzbaren Schneid- und Kratzteller (35) besteht.

12. Vorrichtung nach Anspruch 11, dadurch gekennzeichnet, daß der Schneid- und Kratzteller (35) als Taumelscheibe mit radial außenseitig und in Austragstellung der Vorrichtung (1) oberseitig angeordneten Schneidmessern (37) und/oder Kratzleisten (37') ausgeführt ist.

13. Vorrichtung nach einem der Ansprüche 1 bis 10, dadurch gekennzeichnet, daß die Zerkleinerungs- und Austrageinrichtung (3) aus einem im Abstand zur offenen Seite (21) des Behälterteils (2) in Querrichtung der Vorrichtung (1) verlaufenden Förderband (30) und aus wenigstens einer zwischen dem Behälterteil (2) und dem Förderband (30) angeordneten, in Drehung um eine in der Austragstellung im wesentlichen horizontale Achse versetzbaren Kratzwelle (135) besteht.

14. Vorrichtung nach Anspruch 13, dadurch gekennzeichnet, daß die Kratzwelle (135) aus einem zylindrischen oder hohlzylindrischen Wellenkörper (135') und aus mit diesem starr verbundenen, radial vorragenden Kratzzinken (137) besteht.

15. Vorrichtung nach Anspruch 13 oder 14, dadurch gekennzeichnet, daß die Kratzzinken (137) jeweils als flache, spitz-elliptische Blechstücke ausgebildet und in Ebenen senkrecht zur Kratzwellen-Drehachse symmetrisch zu dieser angeordnet sind.

16. Vorrichtung nach einem der Ansprüche 13 bis 15, dadurch gekennzeichnet, daß die Kratzwelle (135) zumindest an ihrer dem Behälterteil (2) zugewandten Seite eine Abdeckung (136) mit einen Durchlauf der Kratzzinken (137) erlaubenden Schlitzen (136') aufweist.

17. Vorrichtung nach einem der Ansprüche 13 bis 16, dadurch gekennzeichnet, daß die Abdeckung (136) im Querschnitt U-förmig ist und daß die seitlichen U-Schenkel der Abdeckung (136) in Richtung zum Förderband (30) hin über die Kratzzinken (137) vorragen.

18. Vorrichtung nach einem der Ansprüche 13 bis 17, dadurch gekennzeichnet, daß mehrere parallel zueinander und quer zur Förderbandlaufrichtung ausgerichtete Kratzwellen (135) vorgesehen sind.

19. Vorrichtung nach einem der Ansprüche 13 bis 18, dadurch gekennzeichnet, daß der Antrieb (138) der Kratzwelle(n) (135) mit dem Antrieb (33) des Förderbandes (30) gekoppelt ist.

20. Vorrichtung nach einem der Ansprüche 1 bis 10, dadurch gekennzeichnet, daß die Zerkleinerungs- und Austrageinrichtung (3) aus einem im Abstand zur offenen Seite (21) des Behälterteils (2) in Querrichtung der Vorrichtung (1) verlaufenden Förderband (30) und aus wenigstens einem zwischen dem Behälterteil (2) und dem Förderband (30) angeordneten Doppelmesser (235) mit zwei schneiden (236, 237) besteht, wobei in Austragstellung die Schneiden (236, 237) in einer vertikalen Ebene liegend der Futtermittelblock-Unterseite zugewandt sind und wobei wenigstens eine der beiden Schneiden (236, 237) in horizontaler Richtung parallel zur Förderbandebene oszillierend bewegbar ist.

21. Vorrichtung nach Anspruch 20, dadurch gekennzeichnet, daß mehrere parallel zueinander und quer zur Förderbandlaufrichtung ausgerichtete Doppelmesser (235) vorgesehen sind.

22. Vorrichtung nach Anspruch 20 oder 21, dadurch gekennzeichnet, daß die Doppelmesser (235) jeweils mit zwei gegenläufig oszillierend bewegbaren Schneiden (236, 237) ausgebildet sind.

23. Vorrichtung nach einem der Ansprüche 20 bis 22, dadurch gekennzeichnet, daß die Doppelmesser (235) hydraulisch durch Kolben-Zylinder-Einheiten (238) antreibbar sind.

24. Vorrichtung nach einem der Ansprüche 1 bis 10 sowie 13 bis 23, dadurch gekennzeichnet, daß in der Zerkleinerungs- und Austrageinrichtung (3) parallel zueinander zwei oder mehr Kratzwellen (135) sowie zwischen diesen jeweils ein Doppelmesser (235) angeordnet sind.

# Fig.1

Fig.2

EP 0 499 772 A1

# Fig.3

# Fig.5

# Fig.4

Fig.6

# Fig. 7

## Fig. 8

## Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 359 482 (MONTEC SYSTEMS LTD.)<br><br>* Seite 2, Spalte 2, Zeile 39 - Zeile 54 *<br>* Zusammenfassung; Abbildung *<br>--- | 1-5,13, 14,15,19 | A01F25/20 |
| D,A | EP-A-0 026 143 (S.A. AUDUREAU)<br><br>* Seite 3, Zeile 15 - Zeile 19 *<br>* Seite 4, Zeile 11 - Zeile 22 *<br>* Seite 5, Zeile 5 - Zeile 24; Abbildungen *<br>--- | 1,2,5,6, 13,14,19 | |
| D,A | GB-A-2 191 992 (P. J. PARMITER ET AL.)<br>* Seite 1, Zeile 53 - Zeile 61 *<br>* Seite 1, Zeile 71 - Zeile 82 *<br>* Seite 1, Zeile 102 - Zeile 123; Abbildungen *<br><br>----- | 1-5 | |

**RECHERCHIERTE SACHGEBIETE (Int. Cl.5 )**

A01F

Der vorliegende Recherchenbericht wurde für alle Patentansprüche erstellt

| Recherchenort | Abschlußdatum der Recherche | Prüfer |
|---|---|---|
| BERLIN | 22 MAI 1992 | MARTIN OEL RIO A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P0403)